(19) Europäisches Patentamt

European Patent Office

Office européen des brevets

(11) **EP 1 599 063 A1**

(12) **EUROPEAN PATENT APPLICATION**

(43) Date of publication:
**23.11.2005 Bulletin 2005/47**

(51) Int Cl.7: **H04Q 7/38**

(21) Application number: **05010890.1**

(22) Date of filing: **19.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **19.05.2004 KR 2004035729**<br><br>(71) Applicant: **SAMSUNG ELECTRONICS CO., LTD.**<br>**Suwon-si, Gyeonggi-do (KR)** | (72) Inventors:<br>• **Kim, Soeng-Hun**<br>  **Yeongtong-gu Suwon-si Gyeonggi-do (KR)**<br>• **Lee, Kook-Heul**<br>  **Yeongtong-gu Suwon-si Gyeonggi-do (KR)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Method and apparatus for scheduling enhanced uplink dedicated channels in a mobile communication system**

(57)      An apparatus and method are provided for performing scheduling in a Node B for data transmission of a user equipment (UE) in a mobile communication system supporting an enhanced uplink dedicated channel (E-DCH). The Node B receives, from a radio network controller (RNC), scheduling assistance information for an uplink service to be provided from the UE. The Node B estimates a data amount for the uplink service on the basis of the scheduling assistance information in each scheduling period. The Node B schedules data transmission for the uplink service according to the estimated data amount.

FIG.3

**Description**

**BACKGROUND OF THE INVENTION**

**Field of the Invention:**

The present invention relates generally to an asynchronous wideband code division multiple access (WCDMA) communication system. More particularly, the present invention relates to a scheduling method and apparatus for supporting an enhanced uplink dedicated channel (E-DCH).

**Description of the Related Art:**

A universal mobile telecommunication service (UMTS) system serving as the third generation mobile communication system uses wideband code division multiple access (WCDMA) based on a global system for mobile communications (GSM) serving as a European mobile communication system and general packet radio services (GPRS). The UMTS system performs packet-based transmission of text, digitized voice, video, and multimedia at data rates up to 2 megabits per second (Mbps) that offers a consistent set of services to mobile computer and phone users no matter where they are located in the world. In UMTS, a packet-switched connection using a packet protocol such as an Internet Protocol (IP) uses a virtual connection that is always available to any other end point in the network.

In uplink (UL) communications from a user equipment (UE) to a Node B, the UMTS system uses an enhanced uplink dedicated channel (E-DCH) to improve the performance of packet transmission. The E-DCH supports technologies such as adaptive modulation and coding (AMC), hybrid automatic retransmission request (HARQ), Node B control scheduling, and others in order to support stable high-speed data transmission.

The AMC determines modulation and coding schemes of a data channel according to channel states between a Node-B and a UE, and improves resource use efficiency. A combination of the modulation and coding schemes is referred to as a modulation and coding scheme (MCS). Various MCS levels can be defined by supportable modulation and coding schemes. The AMC adaptively changes an MCS level according to channel states between a Node-B and a UE, and improves resource use efficiency.

The HARQ is a scheme for re-transmitting a packet to compensate for an erroneous packet when an error occurs in an initially transmitted data packet. The HARQ scheme is divided into a chase combining (CC) scheme for re-transmitting a packet with the same format as that of the initially transmitted data packet when an error occurs, and an incremental redundancy (IR) scheme for re-transmitting a packet with a format different from that of the initially transmitted data packet when an error occurs.

According to the Node B control scheduling, a Node B determines uplink data transmission and an upper limit of a data rate when multiple UEs transmit data using the E-DCH, and sends information to the UEs through a scheduling command. The UEs refer to the scheduling command, and determine a data rate of an uplink E-DCH.

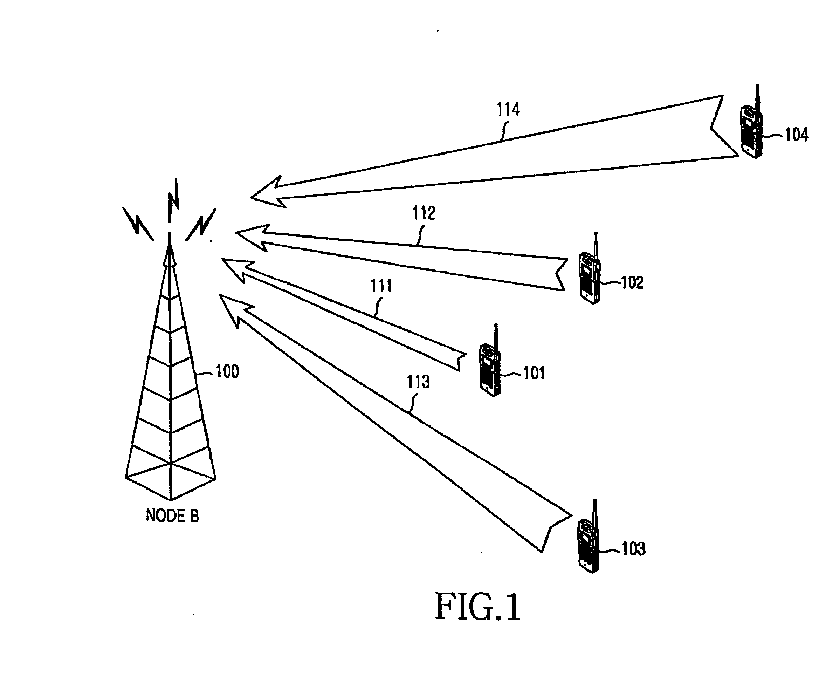

FIG. 1 illustrates uplink packet transmission through the E-DCH in the conventional wireless communication system. In FIG. 1, reference numeral 100 denotes a Node B for supporting the E-DCH, and reference numerals 101, 102, 103, and 104 denote UEs using the E-DCH. As illustrated in FIG. 1, the UEs 101 to 104 transmit data to the Node B 100 through E-DCHs 111, 112, 113, and 114, respectively.

Using a data buffer status, requested data rate, or channel status information of the UEs 101 to 104, the Node B 100 provides each UE with information indicating if E-DCH data transmission is possible, or performs a scheduling operation for controlling an E-DCH data rate. To improve the overall performance of the system, the scheduling operation assigns relatively low data rates to the UEs 103 and 104 that are far away from the Node B 100 such that a noise rise value measured by the Node B 100 does not exceed a target value. However, the scheduling operation assigns relatively high data rates to the UEs 101 and 102 close to the Node B 100.

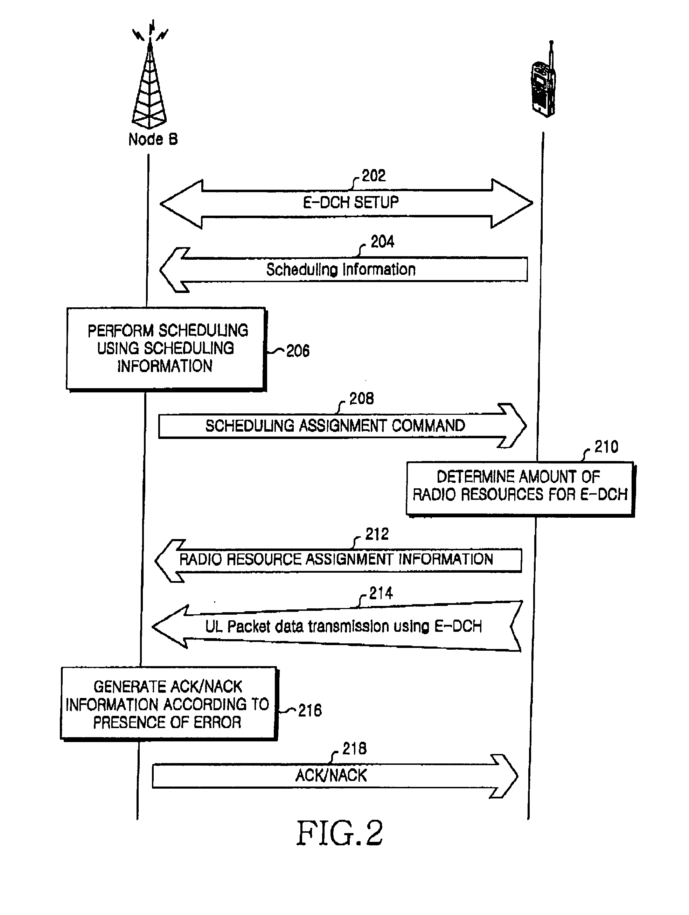

FIG. 2 is a call flow diagram illustrating a transmission and reception procedure through the conventional E-DCH.

Referring to FIG. 2, the Node B and the UE establish the E-DCH in step 202. Step 202 includes a process for sending messages through a dedicated channel. When the E-DCH has been established, the UE notifies the Node B of scheduling information in step 204. The scheduling information includes UE transmission power information for an uplink channel, remaining UE transmission power information, information about an amount of transmission data accumulated in a buffer of the UE, and others.

When receiving the scheduling information from a plurality of UEs currently performing communication, the Node B monitors scheduling information of the UEs to schedule data transmission of the UEs in step 206. In step 208, the Node B determines whether to allow the UE to transmit an uplink packet, and sends a scheduling assignment command to the UE. The scheduling assignment command includes information about an allowed data rate and allowed transmission timing, and others. In step 210, the UE determines the amount of radio resources to be assigned to the E-DCH using the scheduling assignment command. In steps 212 and 214, the UE transmits uplink (UL) packet data through the E-DCH and simultaneously sends, to the Node B, radio resource assignment information including a transport format resource indicator (TFRI) necessary to demodulate the E-DCH. In step 214, the UE selects an MCS level by considering radio resources assigned by the Node B and a channel state, and transmits the UL packet data using the MCS level.

In step 216, the Node B determines if an error is present in the TFRI and/or the packet data. In step 218, the Node B sends non-acknowledge (NACK) information to the UE through an NACK channel when an error is present, and sends acknowledge (ACK) information to the UE through an ACK channel when no error is present. When the ACK information is sent, the packet data transmission is completed, and the UE transmits new user data through the E-DCH. However, when the NACK information is sent, the UE re-transmits the same packet data through the E-DCH.

Representative services capable of being provided through the E-DCH are a streaming service, interactive service, and background service. The streaming service is a quasi-realtime service sensitive to delay, and corresponds to, for example, video streaming. In this streaming service, data is generated regularly, but the utility value of the data is lost when the data is delayed for a predetermined time. The interactive service is not sensitive to delay, but a user is inconvenienced when data transmission or reception is delayed for a relatively long time. For example, a web browsing service corresponds to the interactive service. In this interactive service, data is irregularly generated, and the utility value of the data is not lost due to delay. The background service is not sensitive to delay as in a file transfer protocol (FTP), and does not have a serious problem even though data transmission or reception is delayed for a relatively long time. In this background service, data is irregularly generated, but the utility value of the data is not lost due to delay.

Because data generation is irregular and not predicted in the case of the interactive or background service, a method for reporting a buffer status to the Node B is useful whenever data is generated. However, because data is regularly generated in the streaming service, the method for reporting a buffer status to the Node B whenever data is generated is inefficient.

For example, in the case of a service in which video is coded according to the H.263 standard which is incorporated herein by reference, 128 75-byte packets are generated per second. Alternatively, in the case of a service in which voice is coded at a 12.2 kbps adaptive multi-rate, 50 32-byte packets are generated per second. In the case where data is generated regularly, an operation for reporting a buffer state whenever data is generated is an important factor causing radio resources to be wasted.

## SUMMARY OF THE INVENTION

It is, therefore, an aspect of the present invention to prevent the inefficient use of radio resources due to buffer status reporting by suitably selecting buffer state reporting according to a type of service in a user equipment (UE).

It is another aspect of the present invention to exactly estimate uplink data generation without buffer status reporting of a user equipment (UE) by providing advance information about regularly generated data from a radio network controller (RNC) to a Node B scheduler.

It is yet another aspect of the present invention to efficiently provide a service sensitive to delay by sending a scheduling assignment command before the utility value of data is lost.

The above and other aspects of the present invention can be achieved by a method for performing scheduling in a Node B for data transmission of a user equipment (UE) in a mobile communication system supporting an enhanced uplink dedicated channel (E-DCH). The method comprises the steps of receiving, from a radio network controller (RNC), scheduling assistance information for an uplink service to be provided from the UE; estimating a data amount for the uplink service on a basis of the scheduling assistance information in each scheduling period; and scheduling data transmission for the uplink service according to the estimated data amount.

The above and other aspects of the present invention can also be achieved by an apparatus for performing scheduling in a Node B for data transmission of a user equipment (UE) in a mobile communication system supporting an enhanced uplink dedicated channel (E-DCH). The apparatus comprises a Node B scheduler for receiving, from a radio network controller (RNC), scheduling assistance information for an uplink service to be provided from the UE, estimating a data amount for the uplink service on a basis of the scheduling assistance information in each scheduling period, and scheduling data transmission for the uplink service using the estimated data amount; and an E-DCH processor.

The above and other aspects of the present invention can also be achieved by a scheduling method for transmitting data according to a scheduling operation of a Node B in a mobile communication system supporting an enhanced uplink dedicated channel (E-DCH). The scheduling method comprises the steps of receiving a radio bearer setup message from a radio network controller (RNC) and establishing radio bearers for the E-DCH according to configuration information included in the radio bearer setup message; examining indication information associated with a buffer status report for at least one uplink service included in the configuration information; and limiting buffer status reporting for an uplink service not requiring the buffer status report, and performing buffer status reporting for an uplink service requiring the buffer status report according to a result of the examination.

The above and other aspects of the present invention can also be achieved by an apparatus for performing scheduling in a user equipment (UE) for transmitting data according to a scheduling operation of a Node B in a mobile communication system supporting an enhanced uplink dedicated channel (E-DCH). The apparatus comprises a service discriminator for detecting and outputting data according to uplink services to be used by a user; a buffer for storing service data output from the service discriminator; a buffer manager for determining if a buffer status report must be sent according to a buffer status and types of the uplink services, sending the buffer status report according to a result of the determination, and receiving a scheduling assignment command; and an E-DCH processor for transmitting data stored in the buffer to the Node B through the E-DCH in response to the scheduling assignment command.

## BRIEF DESCRIPTION OF THE DRAWINGS

The above and other aspects and advantages of the present invention will be more clearly understood from the following detailed description taken in conjunction with the accompanying drawings, in which:

FIG. 1 illustrates uplink packet transmission in a conventional mobile communication system;
FIG. 2 is a call flow diagram illustrating a transmission and reception procedure through a conventional enhanced uplink dedicated channel (E-DCH);
FIG. 3 is a block diagram illustrating the operation between a Node B and a user equipment (UE) in accordance with an embodiment of the present invention;
FIG. 4 is a call flow diagram illustrating control signal flows between a Node B and a UE in accordance with an embodiment of the present invention;
FIG. 5 is a flow chart illustrating the operation of the UE in accordance with an embodiment of the present invention; and
FIG. 6 is a flow chart illustrating the operation of the Node B in accordance with an embodiment of the present invention.

Throughout the drawings, the same or similar elements are denoted by the same reference numerals.

## DETAILED DESCRIPTION OF EXEMPLARY PREFERRED EMBODIMENTS

Embodiments of the present invention will now be described in detail herein below with reference to the accompanying drawings. In the following description, a detailed description of known functions and configurations incorporated herein will be omitted for conciseness. It is to be understood that the phraseology and terminology used herein are for the purpose of description and should not be regarded as limiting.

First, interfaces between a user equipment (UE) and a Node B in a wideband code division multiple access (WCDMA) system to which the present invention is applied will be described.

An interface between the UE and a wireless communication network is referred to as a Uu interface. The Uu interface is divided into a control plane used to exchange a control signal and a user plane used to transmit data.

The control plane comprises a radio resource control (RRC) layer, a radio link control (RLC) layer, a media access control (MAC) layer, and a physical (PHY) layer. The user plane comprises a packet data convergence protocol (PDCP) layer, a broadcast/multicast control (BMC) layer, an RLC layer, a MAC layer, and a PHY layer. The PHY layer is located in each Node B or cell, and the MAC layer, the RRC layer, and others are located in a radio network controller (RNC).

The PHY layer provides an information transmission service using the radio transfer technology, and corresponds to the first layer of an open system interconnection (OSI) model. Transport channels are connected between the PHY and MAC layers. The transport channels are defined by a scheme for processing specific data in the PHY layer. The transport format of the transport channels is referred to as TF. The transport format of a PHY layer mapped to a plurality of transport channels is indicated by a TFC indicator (TFCI) indicating one of transport format combinations (TFCs).

The MAC and RLC layer are connected through logical channels. The MAC layer receives data through a logical channel from the RLC layer, and delivers the received data to the PHY layer through a suitable transport channel. Moreover, the MAC layer receives data through a transport channel from the PHY layer, and delivers the received data to the RLC layer through a suitable logical channel. Moreover, the MAC layer inserts additional information into data delivered through a logical or transport channel, or interprets inserted information to take a suitable operation and controls a random access operation. In the MAC layer, an entity relating to a dedicated service is referred to as a MAC-d entity, and an entity relating to a common service is referred to as a MAC-c entity. In relation to an embodiment of the present invention, an entity responsible for controlling the E-DCH and transmitting data through the E-DCH is referred to as a MAC-e entity.

The RLC layer is responsible for establishing and releasing a logical channel. The RLC layer can operate in one of three operating modes an acknowledged mode (AM), unacknowledged mode (UM), and transparent mode (TM). These three operating modes provide different functions. Conventionally, the RLC layer is responsible for dividing or assembling a service data unit (SDU) received from a higher layer to a suitable size, and an error correction function.

The PDCP layer is located in a higher level of the RLC layer on the user plane. The PDCP layer is responsible for compressing or decompressing a header of Internet protocol (IP) packet data, and a lossless transfer function in a state in which a RNC providing a service to a specific UE is changed.

Characteristics of a transport channel connected between PHY and higher layers are defined by the TF prescribing processing schemes such as convolutional channel encoding, interleaving, and service-specific rate matching.

As described above, the E-DCH used for a WCDMA communication system supports adaptive modulation and coding (AMC), hybrid automatic retransmission request (HARQ), Node B control scheduling, and others. UEs send, to the Node B, scheduling information such as a UE buffer status, a UE power status, and the like such that all available resources of the Node B are assigned to selected optimal terminals at each time interval, and Node B control scheduling is efficiently performed.

The UEs for providing a plurality of services through the E-DCHs configure a plurality of priority queues (PQs) therefor, and temporarily store service data in the PQs. Then, the UEs report, to the Node B, an amount of data stored in each PQ. The Node B performs scheduling on the basis of reporting of the UEs.

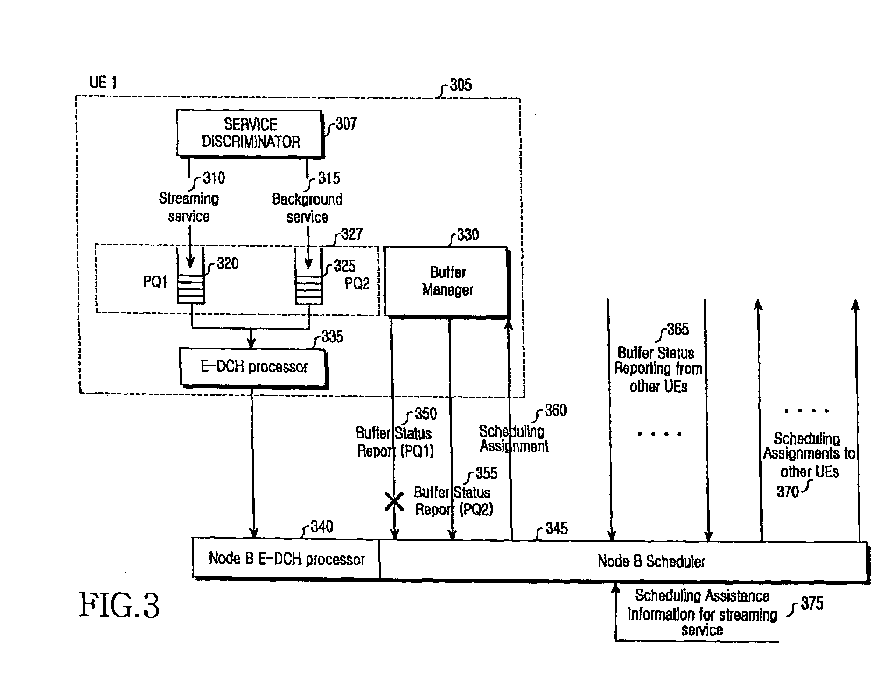

FIG. 3 illustrates the operation between the Node B and the UE in accordance with an embodiment of the present invention.

UE-1 305 transmits streaming service data 310 and background service data 315 detected and output by a service discriminator 307 using an E-DCH processor 335. The streaming service data 310 is stored in PQ-1 320 within a buffer 327 before being transmitted through the E-DCH, and the background service data 315 is stored in PQ-2 325 within the buffer 327. A buffer manager 330 monitors the statuses of PQ-1 320 and PQ-2 325. Because the streaming service data 310 is regularly input to PQ-1 320, the buffer manager 330 does not report the buffer status for PQ-1 320.

The buffer manager 330 determines that service data not requiring buffer status reporting is stored in PQ-1 320. Even when the buffer status for PQ-1 320 is varied, the buffer manager 330 does not send a buffer status report 350. Alternatively, the buffer manager 330 determines that service data requiring buffer status reporting is stored in PQ-2 325. When the buffer status for PQ-2 325 is varied, the buffer manager 330 sends a buffer status report 355.

For example, the buffer manager 330 sends the buffer status report 355 when new data is stored in PQ-2 325 or a data amount of PQ-2 325 exceeds a threshold value.

Similarly, a Node B scheduler 345 receives buffer status reporting 365 from other UEs.

The Node B scheduler 345 assigns radio resources to the UEs on the basis of the buffer status reports 355 and 365 received from the UEs including the UE 305, and scheduling assistance information 375 for a streaming service. Information about the assigned radio resources is sent to corresponding UEs through scheduling assignment commands 360 and 370.

Specifically, the Node B scheduler 345 receives, from a radio network controller (RNC) (not illustrated), the scheduling assistance information 375 comprising information about regular data generation in PQ-1 320 of LTE-1 305 and information about how to schedule data of PQ-1 320. For example, when data of an amount value E is generated from PQ-1 320 of UE-1 305 in a period D, the scheduling assistance information may include information indicating that transmission resources capable of transmitting the data of the amount value E in the period D must be assigned for PQ-1 320. Accordingly, the scheduler 345 estimates a data amount of PQ-1 320 through the scheduling assistance information 375.

The scheduler 345 determines basic radio resources to be assigned to transmit data of PQ-1 320 using the estimated data amount of PQ-1 320, and determines radio resources to be assigned to transmit data stored in PQ-2 325 on the basis of the buffer state report 350 sent from UE-1 305. The scheduling assignment command 360 to be sent to UE-1 305 comprises information about a sum of radio resources determined for PQ-1 320 and PQ-2 325.

The UE 305 to which the radio resources are assigned through the scheduling assignment command 360 sends data stored in the PQs 320 and 325 to the E-DCH processor 335. The E-DCH processor 335 transmits data through the E-DCH. An E-DCH processor 340 of the Node B delivers the data received through the E-DCH to the RNC. The E-DCH processors 335 and 340 are associated with PHY layer implementation, and are not directly associated with the present invention. Accordingly, a detailed description of these E-DCH processors 335 and 340 is omitted.

For the above-described streaming service, the Node B estimates an amount of streaming service data from scheduling assistance information. The RNC determines the scheduling assistance information on the basis of quality of service (QoS) parameters of radio bearers (RBs) for providing the streaming service. The scheduling assistance information is assistance information necessary to perform scheduling such that the utility value of generated data is not lost as a data generation status is reported to the scheduler in the streaming service. For example, the scheduling assistance information includes information about a data amount (hereinafter, referred to as Data_Amount) and a repetition period (hereinafter, referred to as Repetition_Period).

Data_Amount indicates an amount of streaming data generated for Repetition_Period. Repetition_Period is a period for maintaining the utility value of the streaming data.

If the Node B has received, from the UE, the scheduling assistance information for an E-DCH service, it assigns, to the UE, transmission resources capable of transmitting data of Data_Amount in Repetition_Period.

Data_Amount depends upon a guaranteed bit rate (GBR) and Repetition_Period as in the following.

$$Data\_Amount = [GBR + retransmission\ margin] * Repetition\_Period$$

Here, the GBR indicates a bandwidth to be provided at any time for the streaming service or interactive service.

The retransmission margin indicates an amount of data according to retransmission of the RLC. For example, because one RLC packet data unit (PDU) out of 100 RLC packet data units (PDUs) is retransmitted when a block error rate (BER) of the PHY layer is 0.01, the retransmission margin becomes 0.01. The GBR indicates a bandwidth to be always guaranteed for a corresponding service, and is defined in the form of bits per second (bps).

Repetition_Period is determined by a transfer delay. The transfer delay is a parameter determined by delay sensitivity of a corresponding service. Repetition_Period is a maximum delay value for a service data unit (SDU) input to a corresponding RB endurable within a Universal Mobile Telecommunications Service (UMTS) Terrestrial Radio Access Network (UTRAN), and is given in milliseconds. In other words, when data does not reach a destination within an allowed transfer delay time, the utility value of the data is lost. In this case, a transmitting side releases the data transmission. The transfer delay and the GBR are defined only for the streaming service.

Repetition_Period indicates a time interval until the utility value of data is lost after one packet reaches a PQ. That is, because the packet must be transmitted within Repetition_Period, the Node B scheduler schedules the packet within Repetition_Period. However, the Node B scheduler cannot track all individual packet generation statuses. In other words, the UE reports packet arrival whenever a packet arrives at a PQ, but it is almost impossible for the Node B scheduler to schedule all packets within Repetition_Period on the basis of the packet arrival report. When it is taken into account that data is regularly generated in the streaming service, the Node B scheduler can approximate an amount of data generated in each Repetition_Period. The GBR indicates an amount of data per second in the streaming service, and the amount of data generated in each Repetition_Period is a value obtained by multiplying the GBR with Repeition_Period. When the obtained value is added to an amount of retransmission data, Data_Amount to be transmitted in the streaming service is computed. That is, data of Data_Amount is generated in Repetition_Period for the streaming service, and the Node B scheduler determines that Data_Amount must be scheduled in each Repetition_Period.

Repetition_Period is affected by operating mode of the RLC layer. If the streaming service does not support retransmission in the RLC layer, Repetition_Period has a value close to a transfer delay. Alternatively, if the streaming service supports two retransmissions, Repetition_Period is a half of the transfer delay.

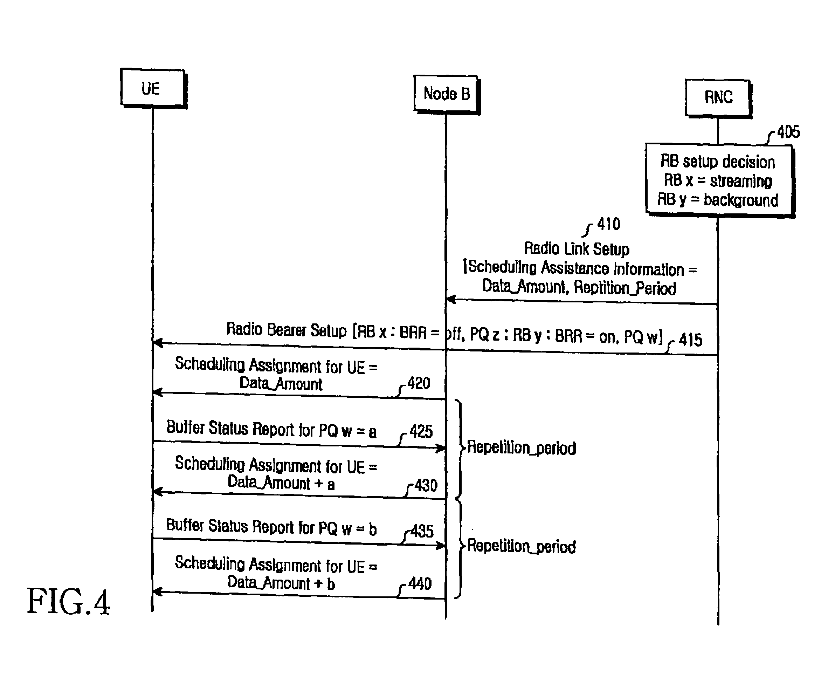

FIG. 4 is a ladder diagram illustrating control signal flow between a Node B and a UE in accordance with an embodiment of the present invention.

In step 405, the RNC determines whether to establish two RBs of RB x and RB y with the UE using the E-DCH. The RBs are established to provide a specific service. The RBs comprise a packet data convergence protocol (PDCP) entity and a radio link control (RLC) entity configured suitably to provide the service. The streaming service is provided through RB x, and the background or interactive service is provided through RB y. The RNC sets PQs for RB x and RB y. For example, PQ z is set for RB x, and PQ w is set for RB y. Conventionally, because the streaming service and the background service are assigned different priorities, different PQs are assigned for RB x and RB y. Upon determining scheduling assignment information to be applied to PQ z mapped to the streaming service on the basis of a GBR and transfer delay of the streaming service, the RNC sends an E-DCH setup message to the Node B in step 410. The message includes E-DCH configuration information for RB x and RB y, and PQ z and PQ w configuration information, and further includes scheduling assignment information.

In step 415, the RNC sends, to the UE, a message comprising the configuration information of the E-DCH for RB x and RB y. The message may be, for example, a RB setup message. The RB setup message comprises indication information (RB x : BRR = off) for limiting buffer status reporting for RB x of the streaming service, and indication information (RB y : BRR = on) for enabling buffer status reporting for RB y of the background or interactive service.

That is, buffer status reporting required (BRR) for RB x is set to 'off', and a BRR for RB y is set to 'on'. The RB setup message comprises mapping information (RB x : PQ z and RB y : PQ w) between RBs and PQs. The RB setup message may comprise GBR information in place of BRR information. For example, the RB setup message may comprise GBR information as indication information (RB x) for limiting buffer status reporting for RB x of the streaming service, and may not comprise GBR information as indication information (RB y : GBR = y kbps) for enabling buffer status reporting for RB y of the background or interactive service.

When the GBR is used in indication information for enabling buffer status reporting, the UE can determine buffer status reporting according to a predetermined condition. For example, if an amount of generated RB data included in the GBR information is less than the GBR, the buffer status is not reported. Otherwise, a difference between the GBR and generated buffer data may be reported.

The present invention supports both a BRR signaling method and a GBR signaling method to control the above-described buffer status reporting, but only the BRR signaling method will be described for convenience.

Scheduling assistance information for the streaming service is sent to the Node B, and the UE is notified of the presence of the buffer status reporting. When an E-DCH is established between the Node B and the UE, they initiate E-DCH communication. Even when the UE generates data for a RB not requiring buffer status reporting as in the streaming service, it does not notify the Node B of the data generation. The Node B estimates the buffer status for PQ z by taking into account data generation corresponding to Data_Amount in each Repetition_Period in the UE according to the scheduling assistance information received from the RNC. When buffer state reporting is not received from the UE, the Node B assigns, to the UE, radio resources associated with the estimated Data_Amount in step 420.

In step 425, when the UE generates data of an amount 'a' for RB y requiring a buffer status report as in the interactive or background service, the data is stored in PQ w, and reports the buffer status for PQ w.

In step 430, the Node B assigns, to the UE, transmission resources capable of transmitting all data based on the estimated Data_Amount for PQ z and the data amount 'a' reported for PQ w.

Similarly, in step 435, when the UE sends a buffer status report of 'PQ w = b', the Node B assigns, to the UE, transmission resources capable of transmitting all data based on the estimated Data_Amount and the data amount 'b' reported for PQ w in step 440.

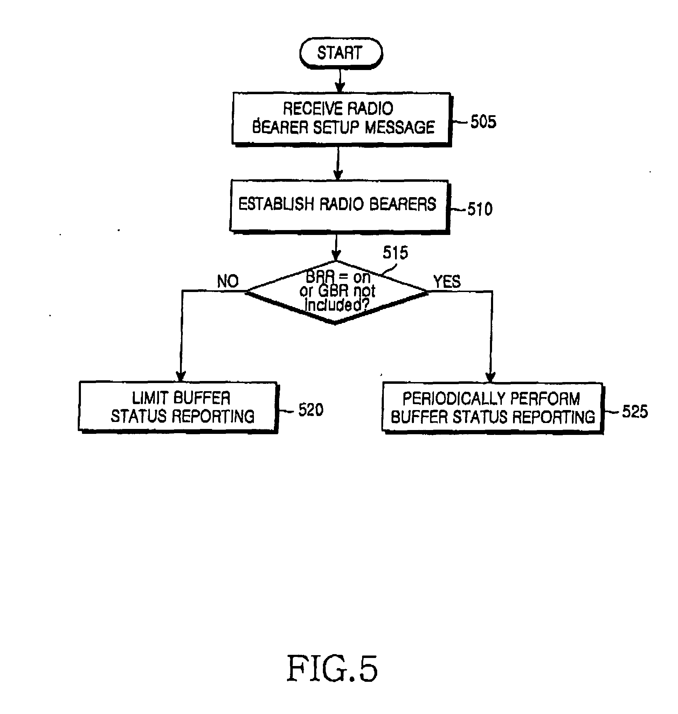

FIG. 5 is a flow chart illustrating the operation of the UE in accordance with an embodiment of the present invention.

In step 505, the UE receives an RB setup message. The message comprises RB configuration information (RLC configuration information, BRR information, and others) and E-DCH configuration information.

In step 510, the UE establishes RBs according to the configuration information. In this case, two layer entities such as PDCP and RLC are established, and a suitable transport channel is connected. In an embodiment of the present invention, the transport channel is an E-DCH. The UE establishes the E-DCH according to the setup message. In this case, an E-DCH processor is established, and various physical channels are established.

In step 515, the UE examines a BRR of the established RB, or examines the presence of a GBR of the established RB. If the BRR is off or the GBR is included, the UE proceeds to step 520. However, if the BRR is on or the GBR is not included, the UE proceeds to step 525.

If the BRR is off, the UE applies Buffer Status Reporting Method 1 for an RB. Buffer Status Reporting Method 1 is applied for RBs to which scheduling assignment information is set.

## Buffer Status Reporting Method 1

Alternative 1: No buffer status reporting is performed for a corresponding RB.

Alternative 2: If untransmitted data is still present until the utility value of the data associated with a corresponding RB is lost and discarded, buffer status reporting is performed. Otherwise, no buffer status reporting is performed.

Alternative 3: Buffer status reporting is performed if an amount of data associated with a corresponding RB exceeds a GBR. Otherwise, no buffer status reporting is performed.

If the BRR is on, the UE applies Buffer Status Reporting Method 2 for the corresponding RB in step 525. Buffer Status Reporting Method 2 is applied for RBs to which scheduling assistance information is not set.

## Buffer Status Reporting Method 2

When data is generated from a corresponding RB and a predetermined condition is satisfied, the UE performs buffer status reporting. The predetermined condition is aimed to prevent excessively frequent buffer status reporting. For example, the predetermined condition can use a threshold value associated with an amount of data stored in a buffer for an RB, and others.

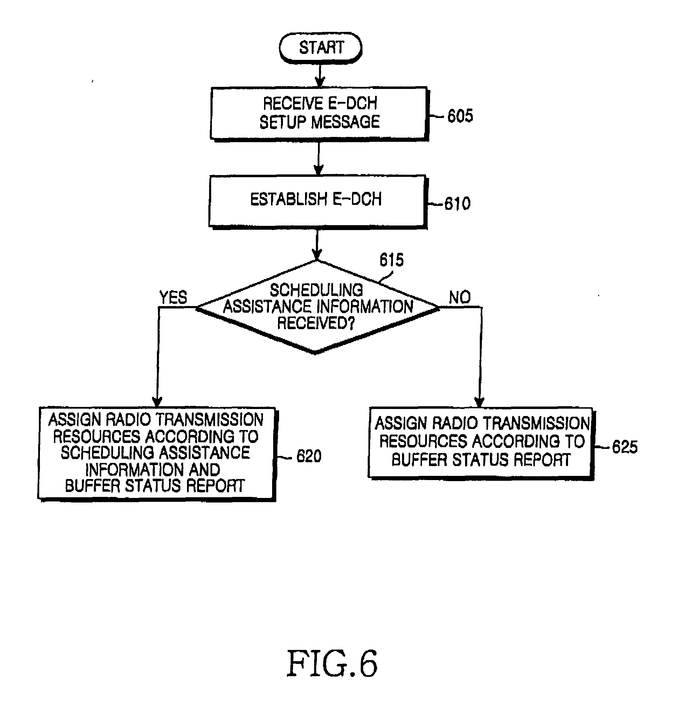

FIG. 6 is a flow chart illustrating the operation of the Node B in accordance with an embodiment of the present invention.

In step 605, the Node B receives an E-DCH setup message associated with the UE. The E-DCH setup message comprises configuration information of various physical channels associated with an E-DCH, and others. In step 610, the Node B establishes the E-DCH with the UE according to the setup message. In step 615, the Node B determines if the message comprises scheduling assistance information. If the message includes the scheduling assistance information, the Node B proceeds to step 620. Otherwise, the Node B proceeds to step 625.

In step 620, when the scheduling assistance information is set, the Node B assigns radio transmission resources capable of transmitting data of an amount estimated from the scheduling assistance information and a buffer status report received from the UE. Streaming data of Data_Amount is generated in each Repetition_Period, regardless of data reported through the buffer status report from the UE, because the streaming data is sensitive to delay. That is, when a buffer status report is not received from the UE, the Node B basically assigns radio resources of Data_Amount in each Repetition_Period in step 620. When the buffer status report is present, the Node B assigns additional transmission resources on the basis of the buffer status report. In step 625, when the scheduling assistance information is not set, the Node B assigns transmission resources on the basis of the buffer status report from the UE.

As is apparent from the above description, the present invention has a number of advantages.

For example, the present invention can reduce transmission resources according to a buffer status report between a user equipment (UE) and a Node B. Moreover, the present invention can smoothly provide a service by scheduling data of a streaming service sensitive to delay before the utility value of data is lost.

Although embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

**Claims**

1. A method for scheduling, in a Node B, data transmission of a user equipment (UE) in a mobile communication system supporting an enhanced uplink dedicated channel (E-DCH), comprising the steps of:

   receiving, from a radio network controller (RNC), scheduling information for an uplink service to be provided from the UE;
   estimating a data amount for the uplink service based on the scheduling information in each scheduling period; and
   scheduling the data transmission for the uplink service according to the estimated data amount.

2. The method of claim 1, wherein the uplink service is a streaming service whose data is generated regularly.

3. The method of claim 1, wherein the scheduling information comprises information about a predetermined repetition period and an amount of data to be generated for the predetermined repetition period.

4. The method of claim 1, wherein the scheduling step comprises the step of:

   assigning radio resources capable of transmitting all data based on a data amount included in information of a buffer status report and the estimated data amount, when the buffer status report is received from the UE.

5. An apparatus for scheduling, in a Node B, data transmission of a user equipment (UE) in a mobile communication system supporting an enhanced uplink dedicated channel (E-DCH), comprising:

   a Node B scheduler for receiving, from a radio network controller (RNC), scheduling information for an uplink service to be provided from the UE, estimating a data amount for the uplink service based on the scheduling information in each scheduling period, and scheduling the data transmission for the uplink service using the estimated data amount; and
   an E-DCH processor for performing the data transmission for the uplink service according to the scheduling result.

6. The apparatus of claim 5, wherein the uplink service is a streaming service whose data is generated regularly.

7. The apparatus of claim 5, wherein the scheduling information comprises information about a predetermined repetition period and an amount of data to be generated for the predetermined repetition period.

8. The apparatus of claim 5, wherein the Node B scheduler assigns radio resources capable of transmitting all data based on a data amount included in information of a buffer status report and the estimated data amount, when the buffer status report is received from the UE.

9. A method for reporting a buffer status in a user equipment(UE) in a mobile communication system supporting an enhanced uplink dedicated channel (E-DCH), comprising the steps of:

   receiving a control message from a radio network controller (RNC) and establishing radio bearers according to configuration information included in the control message;
   examining information associated with a buffer status report for at least one service included in the configuration information; and
   limiting the buffer status reporting for the service not requiring the buffer status report, and performing buffer status reporting for the service requiring the buffer status report according to a result of the examination.

10. The scheduling method of claim 9, further comprising the steps of:

   determining a streaming service whose data is regularly generated as the service that does not require the buffer status report; and
   determining a background service whose data is not regularly generated as the service that requires the buffer status report.

11. The scheduling method of claim 9, wherein the examining step comprises the step of:

   determining if the buffer status report is required according to 'on' setup information of buffer status reporting required (BRR) included in the indication information or guaranteed bit rate (GBR) information.

12. The scheduling method of claim 9, wherein the step of performing the buffer status reporting comprises the step of:

   sending the buffer status report to the Node B, wherein the buffer status report comprises information about an amount of data for at least one different service rather than a streaming service whose data is generated regularly.

13. The scheduling method of claim 12, wherein the step of performing the buffer status reporting comprises the step of:

   sending, to the Node B, the buffer status report comprising information about the amount of data for the at least one different service, when new data for the at least one different service is generated or the amount of data for the at least one different service exceeds a threshold value.

14. The scheduling method of claim 9, further comprising the step of:

   sending, to the Node B, the buffer status report comprising information about an amount of data to be transmitted for the at least one uplink service, when untransmitted data is still present until a utility value of the data for the at least one uplink service not requiring the buffer status report is lost and discarded.

15. An apparatus for scheduling, in a user equipment (UE), data transmission in a mobile communication system supporting an enhanced uplink dedicated channel (E-DCH), comprising:

   a buffer for storing service data output;
   a buffer manager for determining if a buffer status report must be sent according to a buffer status and types of services, sending the buffer status report according to a result of the determination, and receiving a scheduling assignment command; and
   an E-DCH processor for transmitting data stored in the buffer to the Node B in response to the scheduling assignment command.

16. The apparatus of claim 15, wherein the service discriminator detects streaming service data regularly generated and service data irregularly generated.

17. The apparatus of claim 15, wherein the buffer manager receives, from a radio network controller (RNC), information indicating if the buffer status report for an uplink service is required.

**18.** The apparatus of claim 17, wherein the buffer manager examines indication information indicating if the buffer status report for an uplink service is required, limits buffer status reporting for an uplink service if the buffer status report is not required, and performs buffer status reporting for an uplink service if the buffer status report is required.

**19.** The apparatus of claim 18, wherein the buffer manager determines if the buffer status report is required according to 'on' setup information of buffer status reporting required (BRR) included in the indication information or guaranteed bit rate (GBR) information.

**20.** The apparatus of claim 15, wherein the buffer manager sends the buffer status report to the Node B, wherein the buffer status report comprises information about an amount of data for at least one different service rather than a streaming service whose data is generated regularly.

**21.** The apparatus of claim 20, wherein the buffer manager sends, to the Node B, the buffer status report comprising information about the amount of data for the at least one different service, when new data for the at least one different service is generated or the amount of data for the at least one different service exceeds a threshold value.

**22.** The apparatus of claim 15, wherein the buffer manager sends, to the Node B, the buffer status report comprising information about an amount of data to be transmitted for an uplink service, when untransmitted data is still present until a utility value of the data for the uplink service not requiring the buffer status report is lost and discarded.

FIG.1

EP 1 599 063 A1

Node B

202

E-DCH SETUP

204

Scheduling Information

PERFORM SCHEDULING
USING SCHEDULING
INFORMATION ~206

208

SCHEDULING ASSIGNMENT COMMAND

210

DETERMINE AMOUNT OF
RADIO RESOURCES FOR E-DCH

212

RADIO RESOURCE ASSIGNMENT INFORMATION

214

UL Packet data transmission using E-DCH

GENERATE ACK/NACK
INFORMATION ACCORDING TO ~216
PRESENCE OF ERROR

218

ACK/NACK

FIG.2

FIG.3

EP 1 599 063 A1

FIG.4

UE        Node B        RNC

RB setup decision
RB x = streaming
RB y = background
405

410
Radio Link Setup
[Scheduling Assistance Information =
Data_Amount, Reptition_Period

Radio Bearer Setup [RB x : BRR = off, PQ z : RB y : BRR = on, PQ w] 415

Scheduling Assignment for UE =
Data_Amount       420

Buffer Status Report for PQ w = a    425

Scheduling Assignment for UE =
Data_Amount + a       430

Repetition_period

Buffer Status Report for PQ w = b    435

Scheduling Assignment for UE =
Data_Amount + b       440

Repetition_period

EP 1 599 063 A1

START

RECEIVE RADIO
BEARER SETUP MESSAGE — 505

ESTABLISH RADIO BEARERS — 510

515
BRR = on
or GBR not
included?

NO

YES

LIMIT BUFFER
STATUS REPORTING — 520

PERIODICALLY PERFORM
BUFFER STATUS REPORTING — 525

FIG.5

```
                    ┌──────────┐
                    │  START   │
                    └────┬─────┘
                         │
                         ▼
        ┌────────────────────────────────┐
        │         RECEIVE E-DCH           │── 605
        │         SETUP MESSAGE           │
        └────────────────┬───────────────┘
                         │
                         ▼
        ┌────────────────────────────────┐
        │        ESTABLISH E-DCH          │── 610
        └────────────────┬───────────────┘
                         │
                         ▼
                                    615
                   ◇◇◇◇◇◇◇◇◇◇◇◇◇◇◇◇◇
       YES        ◇   SCHEDULING    ◇        NO
   ┌◄────────────◇ ASSISTANCE INFORMATION ◇────────────┐
   │             ◇    RECEIVED?    ◇                    │
   │              ◇◇◇◇◇◇◇◇◇◇◇◇◇◇◇◇◇                     │
   │                                                    │
   ▼                                                    ▼
┌──────────────────────────┐          ┌──────────────────────────┐
│ ASSIGN RADIO TRANSMISSION│          │ ASSIGN RADIO TRANSMISSION│
│ RESOURCES ACCORDING TO   │── 620    │ RESOURCES ACCORDING TO   │── 625
│ SCHEDULING ASSISTANCE    │          │ BUFFER STATUS REPORT     │
│ INFORMATION AND          │          └──────────────────────────┘
│ BUFFER STATUS REPORT     │
└──────────────────────────┘
```

# FIG.6

**European Patent Office**

## EUROPEAN SEARCH REPORT

Application Number

EP 05 01 0890

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | 3GPP: "3GPP TR 25.896 v6.0.0 (2004-03) 3rd Generation Partnership Project; Technical Specification Group Radio Access Network; Feasibility Study for Enhanced Uplink for UTRA FDD (Release 6)"[Online] March 2004 (2004-03), page 1,2,16-26, XP002342959 Retrieved from the Internet: URL:http://www.3gpp.org/ftp/Specs/html-inf o/25896.htm> [retrieved on 2005-08-31] * page 16, line 38 - page 18, line 33 * * page 20, line 1 - page 22, line 34 * * page 24, lines 4-29 * ----- | 1-22 | H04Q7/38 |
| A | 3GPP: "3GPP TS 23.107 v6.1.0 (2004-03) 3rd Generation Partnership Project; Technical Specification Group Services and System Aspects; Quality of Service (QoS) concept and architecture (Release 6)"[Online] March 2004 (2004-03), page 1-41, XP002342960 Retrieved from the Internet: URL:http://www.3gpp.org/ftp/Specs/html-inf o/23107.htm> [retrieved on 2005-08-31] * page 14, line 8 - page 17, line 30 * * page 20, line 22 - page 26, line 21 * ----- | 1-22 | |

TECHNICAL FIELDS SEARCHED (Int.Cl.7)

H04Q

The present search report has been drawn up for all claims

| Place of search | Date of completion of the search | Examiner |
|---|---|---|
| Berlin | 31 August 2005 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)